Europäisches Patentamt

European Patent Office

Office européen des brevets

(11) Veröffentlichungsnummer: **0 381 128**
**A2**

(12) **EUROPÄISCHE PATENTANMELDUNG**

(21) Anmeldenummer: **90101776.4**

(22) Anmeldetag: **30.01.90**

(51) Int. Cl.⁵: **B68G 7/10, D06H 5/00**

(30) Priorität: **02.02.89 DE 3903129**
**26.05.89 DE 3917093**

(43) Veröffentlichungstag der Anmeldung:
**08.08.90 Patentblatt 90/32**

(84) Benannte Vertragsstaaten:
**ES FR GB IT SE**

(71) Anmelder: **GRAMMER AG**
**Wernher-von-Braun-Strasse 6**
**D-8450 Amberg/Opf.(DE)**

(72) Erfinder: **Pajer, Pavel**
**Hammergutstrasse 34**
**D-8457 Kümmersbruck(DE)**

(74) Vertreter: **LOUIS, PÖHLAU, LOHRENTZ & SEGETH**
**Kesslerplatz 1 Postfach 3055**
**D-8500 Nürnberg-1(DE)**

(54) Verfahren zum Abdichten von miteiander verbundenen Bezugsteilen und Vorrichtung zur Durchführung des Verfahrens.

(57) Es wird ein Verfahren und eine Vorrichtung zum Abdichten der Nähte (48) mehrteiliger Bezüge hinterschäumter Polsterteile mit einem Abdichtband (18) beschrieben, das entlang der gemeinsamen Naht (48) auf die an die Naht angrenzenden Randabschnitte (40) der Bezugsteile (28) des Bezuges aufgebracht und mit den Randabschnitten (40) abdichtend verbunden wird. Die Bezugsteile (28) werden mit ihren Randabschnitte (40) umgefaltet, wobei die Naht (48) die Faltkante bildet. Desgleichen wird das Abdichtband (18) in seiner Längsrichtung umgefaltet, und das umgefaltete Abdichtband (18) wird an den umgefalteten Randabschnitten (40) der Bezugsteile (28) angeordnet und mit den umgefalteten Randabschnitten (40) abdichtend verbunden.

EP 0 381 128 A2

## Verfahren zum Abdichten von miteinander verbundenen Bezugsteilen und Vorrichtung zur Durchführung des Verfahrens

Die Erfindung betrifft ein Verfahren zum Abdichten der Nähte mehrteiliger Bezüge hinterschäumter Polsterteile gemäss dem Oberbegriff des Anspruchs 1 sowie eine Vorrichtung zur Durchführung des Verfahrens gemäss dem Oberbegriff des Anspruchs 6, wie sie aus der Praxis bekannt sind.

Bislang werden die Abdichtbänder von Hand über der die Bezugsteile miteinander verbindenden Naht angeordnet und an den an die Naht angrenzenden Randabschnitten der Bezugsteile abdichtend befestigt, um die Naht zwischen den Bezugsteilen abzudichten. Das ist zeitaufwendig und beeinflusst die Herstellungskosten eines hinterschäumten Polsterteiles in nachteiliger Weise.

Aus der DE 36 00 049 A1 ist ein Verfahren zum Anbringen von Nahtdichtungsbändern an Inlettplattenzuschnitten für von aussen zu übersteppende Daunendecken bekannt, wobei die Nahtdichtungsbänder auf der Innenseite des Inlettplattenzuschnittes unter gegenseitigem Abstand in Längs- und Querrichtung mittels eines thermisch aktivierbaren Klebers aufgeklebt werden. Dieses Verfahren ist dadurch gekennzeichnet, dass der Kleber in einer oder mehreren schmalen linienförmigen Klebebereichen entweder in einer Vorfertigung einseitig auf ein zu verwendendes Nahtdichtungsband aufgebracht oder erst beim Auflegen desselben in den Zwischenbereich zwischen diesem und dem Inlettplattenzuschnitt eingebracht wird, und dass der Kleber beim fortlaufenden Auflegen des Nahtdichtungsbandes auf den Inlettplattenzuschnitt durch direkte Wärmezufuhr in den Zwischenbereich aktiviert wird. Desgleichen ist aus dieser Druckschrift eine Vorrichtung zur Durchführung des Verfahrens bekannt, mit einer Bandrolle zum fortlaufenden Zuführen des Nahtdichtungsbandes, mit einem Andruckglied zum Andrücken des Nahtdichtungsbandes gegen den Inlettplattenzuschnitt, mit einem Bewegungsmechanismus zum Erzeugen einer Relativbewegung zwischen dem Andruckglied und dem Inlettplattenzuschnitt in Richtung des Nahtdichtungsbandes, und mit einem zu dem Andruckglied stationären sowie in den Zwischenraum zwischen dem Nahtdichtungsband und dem Inlettplattenzuschnitt gerichteten Aktivierungsglied zum Zuführen von Wärme und/oder Kleber.

Die DE 33 36 356 A1 beschreibt eine Vorrichtung, die insbes. zum mehrfachen Falten und Verfestigen der Längs- und/oder Querkanten von aus fortlaufenden Bahnen geschnittenen Gewebestükken o.dgl. vorgesehen ist. Diese Vorrichtung besteht aus einem ersten Flachpressrollenpaar, an dem sich in Förderrichtung des Gewebestückes eine Vorfalteinrichtung, ein zweites Flachpressrollenpaar, eine Fertigfalteinrichtung und ein drittes Flachpressrollenpaar anschliessen, wobei alle Rollenpaare zueinander synchron umlaufen. Die Falteinrichtungen haben jeweils einen an der Unterseite des umzufaltenden Gewebestück-Randteiles angreifenden und zum Gewebestückvorschub synchron wirksamen Stetigförderer, der so über die Pressebene der miteinander tangierenden Flachpressrollen hinausragt, dass der Stetigförderer zusätzlich die Faltung einleitet. Ausserdem ist neben dem Stetigförderer ein stationärer, auf die Oberseite eines Gewebestückes wirksamer flacher Niederhalter vorgesehen, dessen dem zu faltenden Gewebestückrand zugewandte Längsseite in Richtung der zu bildenden Faltkante angeordnet ist. Oberhalb des vorgenannten ersten Stetigförderers ist ein zweiter, vom Einleitungsbereich der Faltung mindestens bis in den Pressbereich des in Gewebestück-Förderrichtung folgenden Flachpressrollenpaares sich erstreckender und am Faltrandteil angreifender Stetigförderer vorgesehen, der ausserhalb des Gewebestückes beginnt und die Faltkante kreuzt.

Der Erfindung liegt die Aufgabe zugrunde, ein Verfahren der eingangs genannten Art und eine Vorrichtung zur Durchführung dieses Verfahrens zu schaffen, wobei die Abdichtung der die Bezugsteile miteinander verbindenden Nähte zeitsparend und mindestens teilautomatisch genau durchführbar ist.

Diese Aufgabe wird verfahrensgemäss durch die Merkmale des kennzeichnenden Teiles des Anspruchs 1 gelöst. Durch die Umfaltung der an die gemeinsame Naht angrenzenden Randabschnitte der Bezugsteile ergibt sich eine gute Zugänglichkeit zur abzudichtenden Naht, und durch die Umfaltung des Abdichtbandes in Längsrichtung wird der Vorteil erzielt, dass eine sichere Verbindung des umgefalteten Abdichtbandes mit den die Naht als Faltkante enthaltenden Randabschnitten der Bezugsteile gewährleistet wird, so dass eine gute Abdichtung der Naht gegeben ist. Nach der Verbindung der Bezugsteile mit dem Abdichtband, d.h. nach der Abdichtung der die Bezugsteile miteinander verbindenden Naht kann die Zusammenfaltung der Bezugsteile selbstverständlich wieder aufgehoben werden, d.h. die Bezugsteile können wieder in eine gemeinsame Ebene aufgespannt werden, um den derartig vorbereiteten Bezug in einem nachfolgenden Arbeitsgang in eine Form einzubringen, in welcher der Bezug zur Herstellung eines Polsterteils mit einem Reaktionsgemisch hinterschäumt wird.

Als zweckmässig hat es sich erwiesen, wenn die Bezugsteile an einem vor einer Führungsscheibe angeordneten Zentrierschwert umgefaltet werden, wobei die Naht der Bezugsteile auf die Schneide des Zentrierschwertes aufgelegt und der umgefaltete Bezug entlang der Schneide des Zentrierschwertes der Führungsscheibe zugeführt wird, wenn die Führungseinrichtung für das Abdichtband abgewinkelt ausgebildet ist und wenn die umgefalteten Bezugsteile und das die Naht der Bezugsteile überdeckende umgefaltete Abdichtband gemeinsam zwischen der Andrückeinrichtung durchbewegt werden. Das umgefaltete Abdichtband kann hierbei mit seiner Faltkante an der die Faltkante bildenden Naht der Bezugsteile eng anliegen oder vorzugsweise von der Naht einen Abstand aufweisen. Dieser Abstand zwischen der Faltkante des Abdichtbandes und der die Faltkante bildenden Naht der Bezugsteile ist bei der Herstellung eines hinterschäumten Polsterteiles deshalb vorteilhaft, weil der hierbei zwischen der Naht und der Faltkante des Abdichtbandes gegebene entlang der Naht der Bezugsteile verlaufende Steg sich im Inneren des hinterschäumten Polsterteiles befindet und somit für die Verbindungsnaht zwischen den Bezugsteilen eine Verankerung bilden kann.

Um einen Verzug zwischen den miteinander verbundenen Bezugsteilen des Bezuges und dem Abdichtband zu verghindern, werden die umgefalteten Bezugsteile mit der gemeinsamen Naht und das umgefalete Abdichtband vorzugsweise mit einander entsprechenden Vorschubgeschweindigkeiten zwischen der Andrückeinrichtung durchbewegt. Bei dieser Andrückeinrichtugn kann es sich bspw. um oszillierende Stempel handeln, zwischen welchen die Bezugsteile und das Abdichtband schrittweise durchbewegt werden. Hierbei ist die Durchsatzgeschwindigkeit jedoch begrenzt Deshalb ist es vorteilhaft, wenn als Andrückeinrichtung ein Paar Antriebsrolen verwendet werden, die aneinander anliegen und die sich mit einer der Vorschubgeschwindigkeit der Bezugsteile und des Abdichtbandes entsprechenden Geschwindigkeit gegeneinander drehen. Auf diese Weise ergibt sich eine kontinuierliche Durchsatzbewegung der Bezugsteile und des Abdichtbandes zwischen der Andrückeinrichtung hindurch, wobei das umgefaltete Abdichtband mit Hilfe der beiden Antriebsrollen gegen die Randabschnitte der Bezugsteile gepresst wird.

Das Abdichtband kann mit einer Klebebeschichtung versehen sein, bei welcher es sich um einen Heisskleber handelt. In diesem Fall ist es zweckmässig, wenn mindestens das Abdichtband mittels einer in der Nachbarschaft der Andrückeinrichtung in deren Zufuhrabschnitt vorgesehenen Heizungseinrichtung erhitzt wird. Selbstverständlich ist es auch möglich, ausser dem Abdichtband auch die Randabschnitte der miteinander verbundenen Bezugsteile zu erwärmen. Mit Hilfe der Heizungseinrichtung kann dem Abdichtband eine derartige Wärmemenge zugeführt werden, dass es anschmilzt und mit Hilfe der Andrückeinrichtung gegen die Randabschnitte der Bezugsteile gepresst wird, um zwischen dem umgefalteten Abdichtband und den Randabschnitten der Bezugsteile eine abgedichtete mechanisch feste Verbindung herzustellen.

Die der Erfindung zugrundeliegende Aufgvabe wird vorrichtungsgemäss durch die Merkmale des kennzeichnenden Teiles des Anspruchs 6 gelöst. Die Führungsscheibe und das Zentrierschwert weisen vorzugsweise eine geringe Wanddicke auf, wobei die Wanddicke des Zentrierschwertes der Wanddicke der Führungsscheibe entsprechen kann. Mit Hilfe des Zentrierschwertes ist es einfach und zeitsparend möglich, die Bezugsteile mit ihrer abzudichtenden Verbindungsnaht an der Schneide des stationären Zentrierschwertes entlangzubewegen und hierbei gleichzeitig umzufalten, wobei die abzudichtende Verbindungsnaht die Faltkante bildet, und den derartig umgefalteten Bezug genau richtig zentriert der Führungsscheibe und somit der Andrückeinrichtung zuzuführen. Gleichzeitig kann mittels der in der Nachbarschaft des Zentrierschwertes befindlichen Führungseinrichtung das Abdichtband umgefaltet und vorzugsweise mit derselben Vorschubgeschwindigkeit wie der umgefaltete Bezug zwischen der Andrückeinrichtung durchbewegt und mittels der Andrückeinrichtung an den an die Naht angrenzenden Randabschnitten der Bezugsteile mechanisch fest und abdichtend befestigt werden.

Das Zentrierschwert weist vorzugsweise eine Schneide auf, die mit einem Endabschnitt zu einem Einlauf-Umfangsabschnitt der Führungsscheibe gerichtet ist und die Andrückeinrichtung überdeckt die Führungsscheibe vorzugsweise entlang eines gemeinsam den Einlauf-Umfangsabschnitt aufweisenden Flächenabschnittes. Das bedeutet, dass die Führungsscheibe mit dem zuletzt genannten Flächenabschnitt zwischen die Andrückeinrichtung hineinragt. Die an die Verbindungsnaht angrenzenden Randabschnitte der Bezugsteile liegen zwischen den Elementen der Andrückeinrichtung also nicht nur unmittelbar aneinander an, sondern sie liegen entlang des genannten Flächenabschnittes sowohl an der Führungsscheibe als auch an den Elementen der Andrückeinrichtung an. Wie bereits weiter oben erwähnt wurde, kann es sich bei der Andrückeinrichtung um gegeneinander oszillierende Stempel handeln, welche die Elemente der Andrückeinrichtung bilden. Als vorteilhaft hat es sich jedoch erwiesen, wenn die Andrückeinrichtung ein Paar gegenläufig antreibbare Antriebsrollen aufweist, die aneinander anliegen. Vorzugsweise bestehen die Anriebsrollen aus einem elastisch nachgiebigen Material. Hierebei kann es sich um ein wärmebeständiges Gummi- oder Kunststoffmaterial handeln. Zwischen den sich gegenläufig drehenden Antriebsrollen können der entlang der Verbindungsnaht umgefaltete Bezug und das an der Führungseinrichtung umgefaltete Abdichtband kontinuierlich durchewegt werden, so dass mit geringem Arbeitsaufwand innerhalb kurzer Durchgangszeiten Bezüge an den Verbindungsnähten ihrer Bezugsteile abgedichtet werden können. Da die Vorrichtung einfach handhabbar ist, ergibt sich der Vorteil, dass sie auch von ungelernten bzw. angelernten Arbeitskräften bedient werden kann, wobei sich gleichzeitig der Vorteil ergibt, dass eine genaue Zuordnung zwischen dem Abdichtband und der Naht der Bezugsteile gewährleistet ist, so dass der Herstellungsausschuss minimal ist.

Die zum Umfalten des Abdichtbandes vorgesehene Führungseinrichtung weist vorzugsweise einen ersten von der Führungsscheibe entfernten Endabschnitt auf, der zur Ebene der Führungsscheibe mindestens annähernd senkrecht ausgerichtet ist, und die Führungseinrichtung weist vorzugsweise einen der Führungsscheibe und der Andrückeinrichtung zugewandten zweiten Endabschnitt auf, der zur Führungsscheibe hin umgefaltet ist, wobei das Abdichtband auf der dem Zentrierschwert und der Führungsscheibe zugewandten Innenseite der Führungseinrichtung geführt ist. Durch die zur Führungsscheibe senkrechte Orientierung des ersten Endabschnittes der Führungseinrichtung ergibt sich der Vorteil, dass die Umfaltung des Führungsbandes mindestens annähernd entlang seiner Längsmittellinie problemlos gewährleistet ist, und dass das derart umgefaltete Abdichtband richtig orientiert zwischen den beiden Antriebsrollen durchbewegt wird. Um die Materialreibung in der Vorrichtung so klein wie möglich zu halten, ist die Führungsscheibe vorzugsweise frei drehbar und bspw. hochglanzpoliert bzw. verchromt. Entsprechend kann das Zentrierschwert und/oder die Führungseinrichtung für das Abdichtband ausgebildet sein. Die Antriebsrollen können einen derartigen Reibungskoeffizienten besitzen, dass mit ihrer Hilfe das umgefaltete Abdichtband und der entlang der Naht umgefaltete Bezug mit einander entsprechenden Vorschubgeschwindigkeiten durch die Vorrichtung durchbewegt werden.

Im Zufuhrabschnitt vor der Andrückeinrichtung ist in der Nachbarschaft der Führungseinrichtugn für das Abdichtband vorzugsweise eine Heizungseinrichtung vorgesehen. Mit Hilfe der Heizungseinrichtung kann das umgefaltete Abdichtband auf eine vorbestimmte Temperatur erhitzt weden, bei welcher das Abdichtband bzw. ein am Abdichtrband vorgesehener Schmelzkleber anschmilzt und eine mechanisch feste abgedichtete Verbindung mit den Randabschnitten der Bezugsteile des Bezuges herstellt.

Die Heizeinrichtung kann in einer zur Richtung der Drehachsen der Antriebsrollen mindestens annähernd parallelen Richtung beweglich sein. Auf diese Weise ergibt sich der Vorteil, dass zum Start der Vorrichtung bei von den Antriebsrollen wegbewegter Heizungseinrichtung der Anfang des umgefalteten Abdichtbandes und der Anfang des umgefalteten Bezuges gut zugänglich zwischen die Antriebsrollen eingeführt werden kann, wonach die Heizungseinrichtung im Zufuhrabschnitt vor den Antriebsrollen angeordnet wird, um das umgefaltete Abdichtband bzw. diesen Schmelzkleber anzuschmelzen.

Die Heizungseinrichtung kann Heizdüsen aufweisen, die an den beiden gegenüberliegenden Seiten des umgefalteten Abdichtbandes und der entlang der gemeinsamen Naht umgefalteten Randabschnitte der Bezugsteile im Zufuhrabschnitt zwischen der Führungseinrichtung und den Antriebsrollen anordenbar sind. Die Heizdüsen sind dabei vorzugsweise derartig ausgerichtet, dass die aus den Heizungsdüsen ausströmende Heissluft in den Spalt zwischen den Antriebsrollen gerichtet wird. Auf diese Weise ergibt sich eine gezielte Erhitzung des Abdichtbandes in dem Bereich, in welchem die Antriebsrollen gegen das Abdichtband drücken, was eine sichere Abdichtung der die Bezugsteile des Bezuges miteinander verbindenden Naht zur Folge hat.

Ein Ausführungsbeispiel der erfindungsgemässen Vorrichtung zur Durchführung des erfindungsgemässen Verfahrens zum Abdichten von miteinander entlang einer Verbindungsnaht verbundenen Bezugteilen ist in der Zeichnung schematisch dargestellt und wird nachfolgend beschrieben. Es zeigt:

Fig. 1 eine Ansicht der Vorrichtung von der Seite,

Fig. 2 eine Ansicht der Vorrichtung in Blickrichtung des Pfeiles II in Fig. 1,

Fig. 3 eine vergrösserte Darstellung des Details III in Fig.2,

Fig. 4 eine räumliche Darstellung der Führungseinrichtung zum Führen und Umfalten des Abdichtbandes, und

Fig. 5 eine räumliche Darstellung der Vorrichtung zum Abdichten von miteinander mittels einer Naht verbundenen Bezugsteilen.

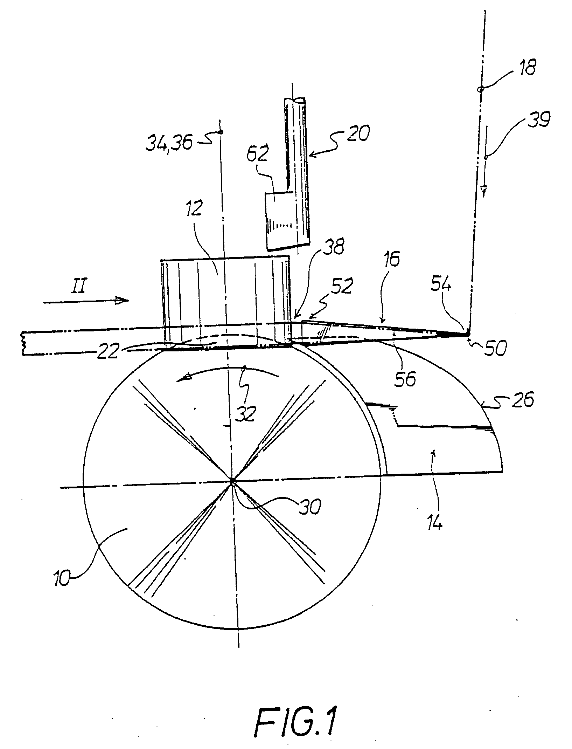

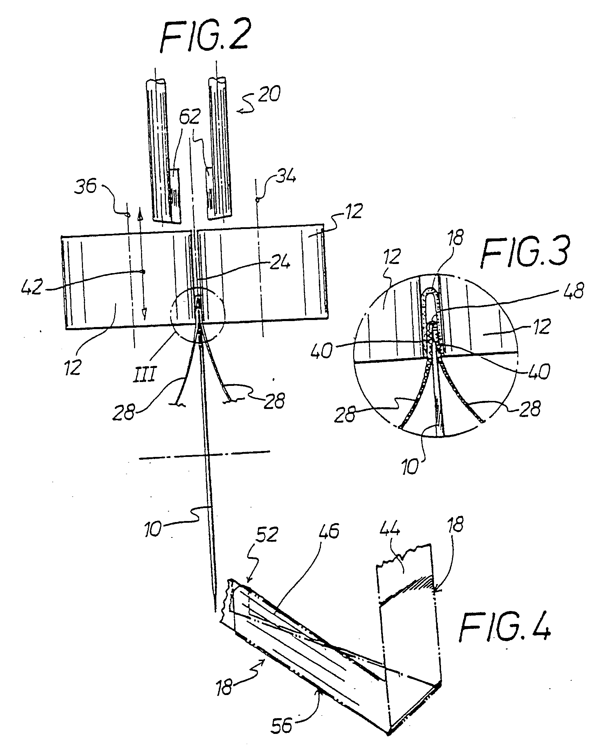

Die Figuren 1 und 2 zeigen eine Führungsscheibe 10, neben der ein Zentrierschwert 14 angeordnet ist, das mit der Führungsscheibe 10 fluchtet. In der Nachbarschaft des Zentrierschwertes 14 und von diesem um einen bestimmten Abstand beabstandet ist eine Führungseinrichtung 16 vorgesehen, die zum Führen und Umfalten eines Abdichtbandes 18 dient. Mit der Bezugsziffer 20 ist eine Heizungseinrichtung bezeichnet, die in der Nachbarschaft der Antriebsrollen 12 vorgesehen ist. Die Führungsscheibe 10 erstreckt sich mit einem Flächenabschnitt 22 in den Spalt 24 zwischen den beiden Antriebsrollen 12 hinein.

Das Zentrierschwert 14 ist mit einer Schneide 26 ausgebildet entlang welcher die mittels einer Verbindungsnaht 48 (sh. Fig. 3) miteinander verbundenen Bezugsteile 28 geführt und umgefaltet der Führungsscheibe 10 zugeführt und zwischen den beiden Antriebsrollen 12 durchgeleitet werden.

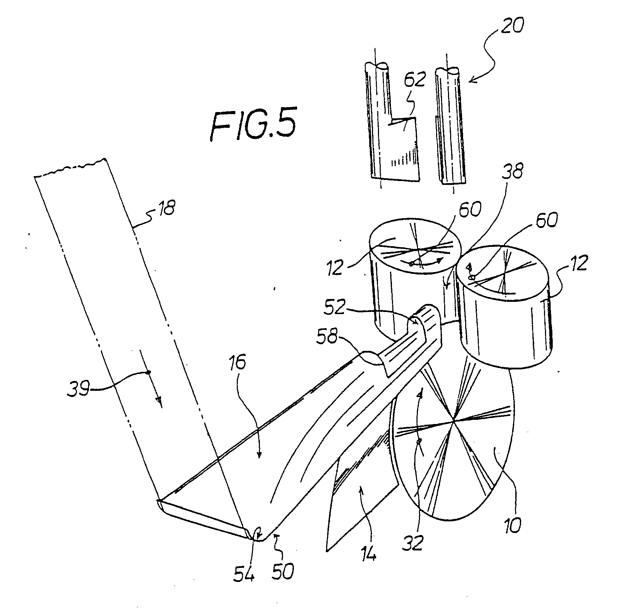

Die Führungseinrichtung 16 zum Führen und Umfalten des Abdichtbandes 18 weist einen ersten Endabschnitt 50 auf, der von den Antriebsrollen 12 entfernt und zum Führungsschwert 14 bzw. zur Führungsscheibe 10 senkrecht ausgerichtet ist. Der erste Endabschnitt 50 ist somit zur Mittelachse 30, um welche die Führungsscheibe 10 frei drehbar ist, parallel ausgerichtet. Die Führungseinrichtung 16 weist einen zweiten Endabschnitt 52 auf, der zum Zentrierschwert 14 hin umgefaltet ist, wie auch aus den Figuren 4 und 5 deutlich ersichtlich ist. Die Faltung der Führungseinrichtung 16 nimmt vom ersten Endabschnitt 50 ausgehend zum zweiten Endabschnitt 52 hin kontinuierlich zu.

Der erste Endabschnitt 50 ist mit einer Abrundung 54 ausgebildet, um das Abdichtband 18 zur Unterseite 56 der Führungseinrichtung 16 zu leiten, wo das Abdichtband 18 umgefaltet wird. Die Führungsscheibe 10 dreht sich um ihre Mittelachse 30 in der durch den Pfeil 32 angedeuteten Drehrichtung. Dementsprechend sind die Antriebsrollen 12 um ihre Mittelachsen 34 bzw. 36 im Uhrzeigersinn bzw. im entgegengesetzten Uhrzeigersinn antreibbar.

Die Heizungseinrichtung 20 ist im Zufuhrabschnitt 38 der beiden Antriebswalzen 12 anordenbar, was in Fig. 2 durch den Doppelpfeil 42 angedeutet ist. Der Pfeil 39 soll in Fig. 1 die Vorschub- bzw. die Transportrichtung des Abdichtbandes 18 verdeutlichen.

Wie bereits ausgeführt worden ist, wird der aus zwei Bezugsteilen 28 bestehende, entlang der Verbindungsnaht 48 verbundene Bezug entlang der Schneide 26 des Zentrierschwertes 14 der Führungsscheibe 10 zugeführt. Gleichzeitig wird mit derselben Vorschubgeschwindigkeit das Abdichtband 18 über den ersten Endabschnitt 50 umgelenkt entlang der Unterseite 56 der Führungseinrichtung 16 in Richtung des Pfeiles 39 vorwärtsbewegt, so dass der Bezug mit seinen Bezugsteilen 28 bzw. mit seinen zur Verbindungsnaht 48 benachbarten Randabschnitten 40 gemeinsam mit dem Abdichtband 18 zwischen den beiden Antriebsrollen 12 durchgeleitet wird, wobei das umgefaltete Abdichtband 18 mit Hilfe der Antriebsrollen 12 an die Randabschnitte 40 der Bezugsteile 28 des Bezuges angepresst wird. Um zwischen dem umgefalteten Abdichtband 18 und den entlang ihrer gemeinsamen Naht 48 umgefalteten Bezugsteilen 28 eine Abdichtung zu bewirken, wird das Abdichtband 18 mittels der Heizungseinrichtung 20 mit Heissluft beaufschlagt, so dass das Abdichtband 18 anschmilzt.

Wie aus Fig. 3 ersichtlich ist, weist die Faltkante des Abdichtbandes 18 von der die Faltkante des Bezuges bildenden Naht 48 einen bestimmten Abstand auf. Durch diesen Abstand wird ein Steg gebildet, der sich beim fertigen hinterschäumten Polster nicht störend bemerkbar macht, weil er sich im Reaktionsgemisch bzw. im Polsterinneren befindet und somit zur Verankerung der Naht 48 bzw. der zur Naht 48 benachbarten Randabschnitte 40 der Bezugsteile 28 dient.

In Fig. 4 ist mit der Bezugsziffer 44 der streifenförmige Originalzustand des Abdichtbandes 18 und mit der Bezugsziffer 46 der Faltzustand des an der Unterseite 56 der Führungseinrichtung 16 verlaufenden Abdichtbandes 18 bezeichnet.

Fig. 5 zeigt in einer räumlichen Darstellung die Führungsscheibe 10, das mit der Führungsscheibe 10 fluchtende Zentrierschwert 14, die Heizungseinrichtung 20, die Führungseinrichtung 16 und die beiden Antriebsrollen 12. Die Führungseinrichtung 16 ist in der Nachbarschaft ihres zweiten Endabschnittes 52 mit einer Aussparung 58 ausgebildet, um das umgefaltete Abdichtband 18 greifen und zwischen den beiden Antriebsrollen 12 einstecken zu können. Mit den Pfeilen 60 sind die einander entgegengesetzten Drehrichtungen der beiden Antriebsrollen 12 angedeutet. Die Drehrichtungen der Antriebsrollen 12 entsprechen der durch den Pfeil 32 angedeuteten Drehrichtung der Führungsscheibe 10, so dass der aus zwei Bezugsteilen bestehende Bezug, der in Fig. 5 nicht gezeichnet ist, gemeinsam mit dem Abdichtband 18 zwischen den beiden Antriebsrollen 12 durchgeleitet werden kann.Mit Hilfe der von den Antriebsrollen 12 bzw. dem Zufuhrabschnitt 38 entfernt gezeichneten Heizungseinrichtung 20 wird das mittels der Führungseinrichtung 10 umgefaltete Abdichtband 18 angeschmolzen und mit den Randabschnitten der Bezugsteile, die in der Nachbarschaft der abzudichtenden Naht vorgesehen sind, abdichtend verbunden. Aus Fig. 5 ist ersichtlich, dass die Heizungseinrichtung 20 Heizdüsen 62 aufweist.

**Ansprüche**

1. Verfahren zum Abdichten der Nähte (48) mehrteiliger Bezüge hinterschäumter Polsterteile mit einem Abdichtband (18), das entlang der Naht (48) auf die an die Naht (48) angrenzenden Randabschnitte (40) der Bezugstiele (28) aufgebracht und mit den Randabschnitten (40) der Bezugsteile (28) abdichtend verbunden wird, **dadurch gekennzeichnet,**

dass die Bezugsteile (28) mit ihren Randabschnitten (40) so umgefaltet werden, dass die Naht (48) die Faltkante bildet, dass das Abdichtband (18) durch eine Führungseinrichtung (16) in seiner Längsrichtung geführt und umgefaltet wird, und dass das umgefaltete Abdichtband (18) an den umgefalteten Randabschnitten (40) der Bezugstiele (28) angeordnet und mit den umgefalteten Randabschnitten (40) mittels einer Andrückeinrichtung (12) abdichtend verbunden wird.

2. Verfahren nach Anspruch 1,
**dadurch gekennzeichnet,**
dass die Bezugsteile (28) an einem vor einer Führungsscheibe (10) angeordneten Zentrierschwert (14) umgefaltet werden, wobei die Naht (48) der Bezugsteile (28) auf die Schneide (26) des Zentrierschwertes (14) aufgelegt und der umgefaltete Bezug entlang der Schneide (26) des Zentrierschwertes (14) der Führungsscheibe (10) zugeführt wird, dass die Führungseinrichtung (16) für das Abdichtband (18) abgewinkelt ausgebildet ist, und dass die umgefalteten Bezugsteile (28) und das die Naht (48) der Bezugsteile (28) überdeckende umgefaltete Abdichtband (18) gemeinsam zwischen der Andrückeinrichtung durchbewegt werden.

3. Verfahren nach Anspruch 1 oder 2,
**dadurch gekennzeichnet,**
dass die umgefalteten Bezugsteile (28) mit der gemeinsamen Naht (48) und das umgefaltete Abdichtband (18) mit einander entsprechenden Vorschubgeschwindigkeiten zwischen der Andrückeinrichtung (12) durchbewegt werden.

4. Verfahren nach einem der vorhergehenden Ansprüche,
**dadurch gekennzeichnet,**
dass als Andrückeinrichtung ein Paar Antriebsrollen (12) verwendet werden, die aneinander anliegen und die sich mit einer der Vorschubgeschwindigkeit der Bezugsteile (28) und des Abdichtbandes (18) entsprechenden Geschwindigkeit gegeneinander drehen.

5. Verfahren nach einem der vorhergehenden Ansprüche,
**dadurch gekennzeichnet,**
dass mindestens das Abdichtband (18) mittels einer in der Nachbarschaft der Andrückeinrichtung (12) in deren Zufuhrabschnitt (38) vorgesehenen Heizungseinrichtung (20) erhitzt wird.

6. Vorrichtung zum Abdichten der Nähte (48) mehrteiliger Bezüge hinterschäumter Polsterteile mit einem Abdichtband (18), das entlang der Naht (48) auf die an die Naht (48) angrenzenden Randabschnitte (40) der Bezugsteile (28) aufbringbar und mit den Randabschnitten (40) der Bezugsteile (28) abdichtend verbindbar ist,
**dadurch gekennzeichnet,**
dass zum Führen des entlang seiner Naht (48) umgefalteten Bezugs eine Führungsscheibe (10) und ein vor der Führungsscheibe (10) angeordnetes und mit der Führungsscheibe (10) fluchtendes Zentrierschwert (14), zum Führen und Umfalten des Abdichtbandes (18) eine in der Nachbarschaft des Zentrierschwertes (14) angeordnete Führungseinrichtung (16) und zum abdichtenden Verbinden des umgefalteten Abdichtbandes (18) mit den an die Naht (48) angrenzenden Randabschnitten (40) der Bezugsteile (28) eine Andrückeinrichtung (12) vorgesehen sind, und dass die Andrückeinrichtung (12) in Vorschubrichtung der umgefalteten Bezugsteile (28) und des Abdichtbandes (18) stromabwärts hinter der Führungseinrichtung (16) und dem Zentrierschwert (14) angeordnet ist.

7. Vorrichtung nach Anspruch 6,
**dadurch gekennzeichnet,**
dass das Zentrierschwert (14) eine Schneide (26) aufweist, die mit einem Endabschnitt zu einem Einlauf-Umfangsabschnitt der Führungsscheibe (10) gerichtet ist, und dass die Andrückeinrichtung (121) die Führungsscheibe (10) entlang eines gemeinsamen, den Einlauf-Umfangsabschnitt aufweisenden Flächenabschnittes (22) überdeckt.

8. Vorrichtung nach Anspruch 6 oder 7
**dadurch gekennzeichnet,**
dass die Andrückeinrichtung ein Paar gegenläufig antreibbare Antriebsrollen (12) aufweist, die aneinander anliegen.

9. Vorrichtung nach Anspruch 8,
**dadurch gekennzeichnet,**
dass die Antriebsrollen (12) aus einem elastisch nachgiebigen Material bestehen.

10. Vorrichtung nach Anspruch 6,
**dadurch gekennzeichnet,**
dass die zum Umfalten des Abdichtbandes (18) vorgesehene Führungseinrichtung (16) einen ersten von der Führungsscheibe (10) entfernten Endabschnitt (50) aufweist, der zur Ebene der Führungsscheibe (10) mindestens annähernd senkrecht ausgerichtet ist, und dass die Führungseinrichtung (16) einen der Führungsscheibe (10) und der Andrückeinrichtung (12) zugewandten zweiten Endabschnitt (52) aufweist, der zur Führungsscheibe (10) hin umgefaltet ist, wobei das Abdichtband (18) auf der dem Zentrierschwert (14) und der Führungsscheibe (10) zugewandten Innenseite (56) der Führungseinrichtung (16) geführt ist.

11. Vorrichtung nach einem der Ansprüche 6 bis 10,
**dadurch gekennzeichnet,**
dass im Zufuhrabschnitt (38) vor der Andrückeinrichtung (12) in der Nachbarschaft der Führungseinrichtung (16) für das Abdichtband (18) eine Heizungseinrichtung (20) vorgesehen ist.

12. Vorrichtung nach Anspruch 11,
**dadurch gekennzeichnet,**
dass die Heizungseinrichtugn (20) in einer zur Richtung der Drehachsen (34, 36) der Antriebsrollen (12) mindestens annähernd parallelen Richtung beweglich ist.

13. Vorrichtung nach Anspruch 11 oder 12,
**dadurch gekennzeichnet,**
dass die Heizungseinrichtung (20) Heizdüsen (62) aufweist, die an den beiden gegenüberliegenden Seiten des umgefalteten Abdichtbandes (18) und der entlang der gemeinsamen Naht (48) umgefalteten Randabschnitte (40) der Bezugsteile (28) im Zufuhrabschnitt (38) zwischen der Führungseinrichtung (16) und den Antriebsrollen (12) anordenbar sind.

*FIG.1*

FIG.2

FIG.3

FIG.4

FIG.5